**Europäisches Patentamt**

**European Patent Office**

**Office européen des brevets**

(19)

(11) Veröffentlichungsnummer : **0 069 170**
**B1**

(12)

# EUROPÄISCHE PATENTSCHRIFT

(45) Veröffentlichungstag der Patentschrift :
07.08.85

(21) Anmeldenummer : 81108911.9

(22) Anmeldetag : 26.10.81

(51) Int. Cl.⁴ : **G 01 F   1/10, G 01 F   1/72//**
**G01F15/08**

(54) **Durchflussmesser.**

(30) Priorität : **12.06.81 US 273146**

(43) Veröffentlichungstag der Anmeldung :
**12.01.83 Patentblatt 83/02**

(45) Bekanntmachung des Hinweises auf die Patenterteilung : **07.08.85 Patentblatt 85/32**

(84) Benannte Vertragsstaaten :
**DE FR GB IT NL SE**

(56) Entgegenhaltungen :
**AT-A- 120 341**
**DE-A- 1 548 898**
**US-A- 3 543 579**

(73) Patentinhaber : **VDO Adolf Schindling AG**
**Gräfstrasse 103**
**D-6000 Frankfurt/Main (DE)**

(72) Erfinder : **Werkmann, Karl-Heinz**
**Goldsteinstrasse 271**
**D-6000 Frankfurt/Main (DE)**
Erfinder : **Sauerschell, Wolfgang**
**Mauerfeldstrasse 18**
**D-6370 Oberursel 5 (DE)**

(74) Vertreter : **Könekamp, Herbert, Dipl.-Ing.**
**Sodener Strasse 9**
**D-6231 Schwalbach (DE)**

## Beschreibung

Die Erfindung bezieht sich auf einen Durchflußmesser für Flüssigkeiten, mit einem Gehäuseblock, in dem radial in eine senkrechte Meßbohrung einmündend eine Zuflußbohrung und eine Abflußbohrung vorgesehen sind, wobei in der Meßbohrung ein vom Durchflußstrom anströmbares Flügelrad angebracht ist, das eine senkrecht angeordnete Lagerwelle besitzt, deren Endzapfen jeweils in einer axial und radial führenden Lagerstelle drehbar gelagert sind, mit einem oder mehreren Flügeln des Flügelrades, deren Anströmflächen gegenüber der Anströmrichtung geneigt sind und mit einem die Drehfrequenz des Flügelrades erfassenden Sensor, wobei die Lagerwelle mit einem axialen Spiel zwischen den Lagerstellen angeordnet und das Flügelrad von unten her anströmbar ist und wobei die Anströmflächen gegenüber der Anströmrichtung derart geneigt sind, daß die in Anströmrichtung gerichtete Kraftkomponente der von dem Durchflußstrom auf das Flügelrad ausgeübten Kraft gleich oder größer ist, als das Gleichgewicht des Flügelrades.

Ein derartiger Durchflußmesser ist aus AT-A-12 03 41 bekannt. Dabei wird durch den Durchflußstrom das Flügelrad angehoben, wodurch Meßungenauigkeiten aufgrund von Reibungsverlusten möglichst gering gehalten werden. Meßungenauigkeiten, die von auf das Flügelrad einwirkenden Pulsationen des Durchflußstromes herrühren, die z. B. von einer Pumpe erzeugt werden können, führen dazu, daß das Durchflußmedium abwechselnd zu einem Vorwärts- und einem Rückwärtslauf beaufschlagt wird. Die Drehrichtung des Flügelrades kann aber von dem Sensor nicht erfaßt werden, sondern nur die Drehfrequenz. Somit kommt es zu einer fehlerhaften Erfassung des Durchflusses durch den Durchflußmesser.

Unterstützt und verstärkt werden die Pulsationen der zu messenden Flüssigkeit durch in ihr enthaltene Gasanteile, die abhängig von den Pulsationen komprimiert bzw. entspannt werden, wodurch sich der Vorwärts- und Rückwärtsfluß der Flüssigkeit am Flügelrad verstärkt.

Aufgabe der Erfindung ist es daher, einen Durchflußmesser nach dem Oberbegriff zu schaffen, der pulsationsbedingte Meßungenauigkeiten vermeidet.

Diese Aufgabe wird erfindungsgemäß dadurch gelöst, daß die Zuflußbohrung mit einer ersten Kammerhälfte und die Abflußbohrung mit der anderen Kammerhälfte des durch eine bewegliche Wand in die zwei Kammerhälften unterteilten Gehäuseblocks verbunden ist. Dadurch kommt es in der durch die bewegliche Wand in zwei Kammerhälften unterteilten Kammer zu einem Pulsationsabbau und somit auch zu einer Vermeidung eines Vorwärts- und Rückwärtsflusses, der das Flügelrad beaufschlagenden Flüssigkeit. Dies führt bei einfachem und billig herstellbarem Aufwand zu einer wesentlichen Erhöhung der Meßgenauigkeit des Durchflußmesser über seinen gesamten Meßbereich.

Dabei ist die bewegliche Wand vorzugsweise eine Membran, da diese schon durch ihre Verformung zur Absorbtion der Pulsation beiträgt. Ist der Durchflußmesser in einem Fahrzeug angeordnet, so ist es von besonderem Vorteil, wenn die Ebene der beweglichen Wand unter einem Winkel zwischen 45° und 90° zur Längsachse des Fahrzeugs angeordnet ist. Dadurch werden durch Beschleunigungen oder Verzögerungen des Fahrzeugs in der Flüssigkeit hervorgerufene Bewegungen weitgehend in der durch die bewegliche Wand unterteilte Kammer aufgefangen und so ein durch den Durchflußmesser nicht verarbeitbares Zurückströmen am Durchflußmedium verhindert. Es kommt somit also nicht zu einer Fehlanzeige.

Ein leicht herstellbarer und damit einfach montierbarer Aufbau wird damit erreicht, daß der Gehäuseblock aus zwei miteinander verbindbaren Gehäusehälften besteht, wobei in jeder Gehäusehälfte topfartig eine der Kammerhälften ausgebildet ist, deren Öffnungen zueinander gerichtet sind und daß die Membran mit ihrem umlaufenden Randbereich zwischen den gegeneinander verspannten Flächen der Gehäusehälften angeordnet ist. Auf diese Weise können mit einfachen Mitteln sowohl die verschiedenen Bohrungen als auch die Kammerhälften ausgearbeitet werden. Dabei ist vorzugsweise zwischen einer der Flächen und der ihr zugewandten Seite des umlaufenden Randbereichs der Membran eine umlaufende Dichtung angeordnet. Diese Dichtung kann ein Dichtring sein. Es ist aber auch möglich, daß die Membran an ihrem zwischen den gegeneinander verspannten Flächen der Gehäusehälften angeordneten Randbereich eine flüssigkeitsdichte Imprägnierung besitzt, wobei bei Verwendung des Durchflußmessers als Kraftstoffmesser vorzugsweise die Imprägnierung kraftstoffabstoßend ist. Diese Imprägnierung verhindert, daß das Durchflußmedium entlang des Fasergewebes der Membran außerhalb des Gehäuseblocks gelangen kann.

Meßfehler, die sich dadurch ergeben, daß bei einem flüssigen Durchflußmedium Gasblasen in diesem Medium enthalten sind, werden vorzugsweise dadurch vermieden, daß an dem nach oben gerichteten Bereich der Zuflußbohrung bzw. der mit ihr verbundenen Kammerhälfte ein Gasabscheideventil angeschlossen ist. Da sich die Gasblasen entlang dieses nach oben gerichteten Bereichs bewegen, werden sie am Gasabscheideventil aus dem Flüssigkeitsstrom herausgeleitet und gelangen nicht bis zum Flügelrad, so daß dort keine durch Gasblasen verfälschten Flüssigkeitsvolumen gemessen werden können.

Das Gasabscheideventil ist vorzugsweise ein Schwimmerventil, wobei der Schwimmer fest mit dem Schließglied verbunden sein kann. Dabei kann das Gasabscheideventil eine Ventilkammer besitzen, in deren unteren Bereich ein mit der Zuflußbohrung bzw. der mit ihr verbundenen Kammerhälfte in Verbindung stehende Einlaß mündet und in deren oberen Bereich ein Auslaß mündet, der von einem Schließglied verschließbar ist, das von einem in der Ventilkammer angeordneten Schwimmer betätigbar ist. Die im nach oben gerichteten Bereich der Zuflußbohrung bzw. der mit ihr verbundenen Kammerhälfte vorhandenen Gasblasen wandern dabei in die normalerweise flüssigkeitsgefüllte Ventilkammer und sammeln sich in deren oberen Bereich. Durch die Flüssigkeit ist der Schwimmer normalerweise nach oben beaufschlagt und drückt auf diese Weise das Schließglied in die Schließstellung des Gasabscheideventils. Durch das Vergrößern des Gasvolumens verringert sich das Flüssigkeitsvolumen und damit das Flüssigkeitsniveau in der Ventilkammer. Dabei sinkt auch der Schwimmer ab und öffnet damit den Auslaß des Gasabscheideventils, so daß das in der Ventilkammer vorhandene Gas abströmen kann. Durch den dabei hervorgerufenen Anstieg des Flüssigkeitsniveaus in der Ventilkammer wird der Schwimmer und dadurch auch das Schließglied wieder in die Schließstellung bewegt und verbleibt dort, bis wieder genug Gas in der Ventilkammer angesammelt ist, um einen erneuten Öffnungsvorgang zu bewirken.

Eine einfache Ausbildung bei gleichzeitig sicherem Verschluß wird dadurch erreicht, daß das Gasabscheideventil ein Setzventil und die Mündung des Auslasses in die Ventilkammer der Ventilsitz ist. Schließglied und/oder der Schwimmer können in Ventilbetätigungsrichtung geführt sein, wobei vorzugsweise der Schwimmer über eine Führungsstange mit dem Ventilglied verbunden ist, die in einer gehäusefesten Führung geführt ist.

Der Auslaß kann entweder mit der Abflußbohrung verbunden sein und damit das Gas dem Flüssigkeitsstrom nach dessen Volumenmessung wieder zugeführt werden. Es ist aber auch möglich, daß der Auslaß mit einem Rücklauf verbunden ist, der z. B. zu einem Flüssigkeitsreservoir führen kann.

Ein einfache Ausbildung besteht darin, daß die Ventilkammer topfartig ausgebildet und die Öffnung durch eine Verschlußschraube verschlossen ist, wobei in der Verschlußschraube der Auslaß ausgebildet ist. Eine derartige Ausbildung kann ohne besondere Werkzeuge hergestellt werden.

Zur Erfassung der Drehfrequenz des Flügelrades wird vorzugsweise durch einen Strahlungssender entlang einer Strahlungsbahn eine Strahlung zu einem Strahlungsempfänger gesendet, wobei die Strahlung intermetierend durch die routierenden Flügel unterbrechbar ist. Die Anzahl der Unterbrechungen der Strahlung ist dann ein Maß für das durch den Durchflußmesser hindurchgeströmte Volumen an Durchflußmedium. Dabei ist vorzugsweise der Strahlungssender eine Lichtquelle und der Strahlungsempfänger ein lichtempfindliches Element, von dem elektrische Signale erzeugbar sind. Die elektrischen Signale können zu ihrer Verarbeitung eine Meßelektronik zuleitbar und in eine elektrische Meßgröße umwandelbar sein.

Um zu vermeiden, daß Temperaturerhöhungen und Temperaturabsenkungen des Durchflußmediums die Meßwerte des Durchflußmessers beeinflussen können, da sich das Volumen des Durchflußmediums temperaturabhängig verändert, kann in einem der Kanäle bzw. der Kammern des Durchflußmessers ein Temperaturfühler angeordnet sein, von dem eine der Temperatur des Durchflußmediums entsprechende elektrische Größe erzeugbar ist, die der Meßelektronik zur Beeinflussung der Meßgröße umleitbar ist. Auf diese Weise ist der von der Meßelektronik abgegebene Meßwert grundsätzlich immer auf eine ganz bestimmte Temperatur bezogen und somit ein allgemein gültiger objektiver Meßwert.

Die Neigung der Anströmflächen gegenüber der Anströmrichtung kann zwischen 45° und 65° betragen, wobei sie vorzugsweise eine Neigung von 52° besitzt. Bei diesen Neigungswinkeln wird eine ausreichend große Anhebekraft auf das flügelrad wirksam, ohne daß ein negativ großer Einfluß auf die Durchflußgeschwindigkeit des Mediums wirksam wird.

Das Flügelrad kann ein Turbinenrad sein.

Eine konstruktiv einfache und bauteilarme Anordnung kann dadurch erreicht werden, daß die Lagerstellen in den zum Flügelrad gerichteten Stirnseiten von in Anströmrichtung vor und hinter dem Flügelrad in der Rohrleitung angeordneten Gleichrichtern ausgebildet ist.

Da bei dem erfindungsgemäßen Durchflußmesser eine Axiallagerung des Flügelrades während des Betriebes nur an der in Anströmrichtung hinteren Lagerstelle erforderlich ist, ist diese zur Reduzierung der Lagerverluste im oberen Meßbereich des Durchflußmessers vorzugsweise als Spitzenlager ausgebildet. Bei der in Anströmrichtung vorderen Lagerstelle ist es vollkammen ausreichend, wenn sie als Zapfenlager ausgebildet ist.

Ein einfach und damit billig herstellbarer Aufbau des Durchflußmessers besteht darin, daß die Rohrleitung eine durchgehende Meßbohrung in einem Gehäuseblock ist, in die das Flügelrad und die Gleichrichter axial einsetzbar sind. Dabei kann eine einfache Montagne der Gleichrichter und des Flügelrades erzielt werden, wenn die Gleichrichter mit Preßpassung in die Meßbohrung einsetzbar sind. Auf einfache Weise kann das nach außen gerichtete Ende der Meßbohrung durch einen Verschluß verschlossen sein, wobei vorzugsweise Verschluß und Gleichrichter ein Bauteil sind.

Eine einfache Herstellbarkeit des Flügelrades ergibt sich dadurch, daß das Flügelrad aus einem auf die Lagerwelle aufgesetzten Flügelkörper besteht, wobei der Flügelkörper ein Kunststoffteil und die Lagerwelle ein Metallteil sein kann, dabei wird auf einfachste Weise der Flügelkörper auf die Lagerwelle aufgespritzt, so daß er keine zusätzliche mechanische Bearbeitung erfordert.

Um zu vermeiden, daß sich der Flügelkörper aufgrund der vom Durchflußmedium auf ihn einwirkenden Axialkräfte auf der Lagerwelle verschieben kann, besitzt die Lagerwelle an ihrer von dem Flügelkörper umschlossenen zylindrischen Mantelfläche Ausnehmungen. Auf diese Weise wird ein Formschluß zwischen Flügelkörper und Lagerwelle hergestellt.

Ein Ausführungsbeispiel der Erfindung ist in der Zeichnung dargestellt und wird im folgenden näher beschrieben. Es zeigen

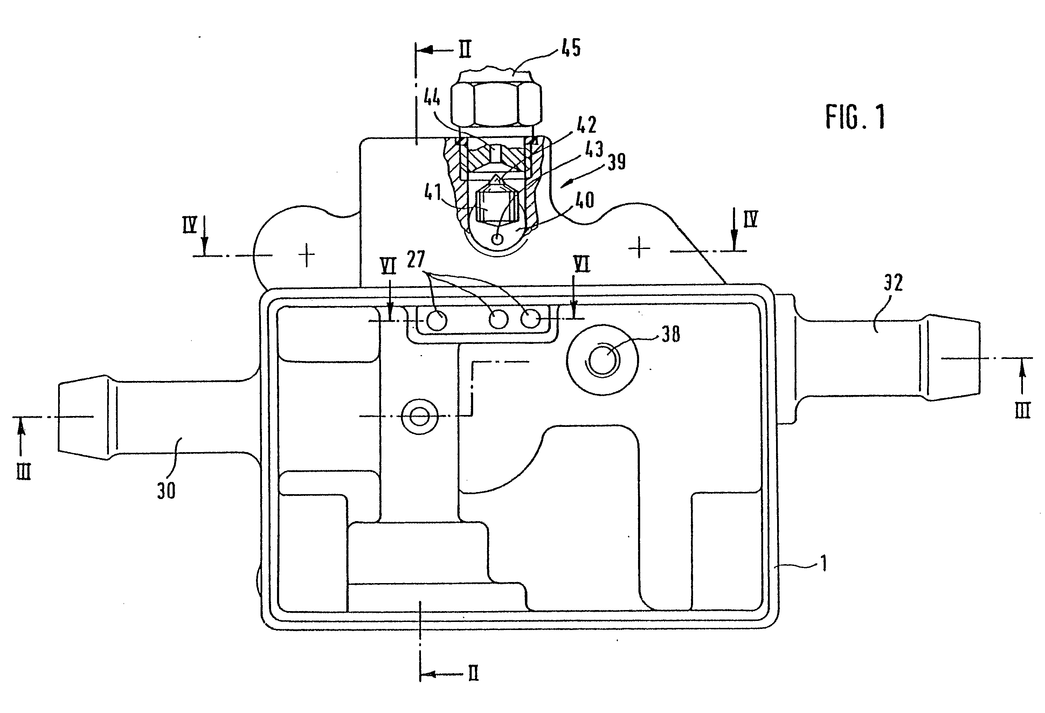

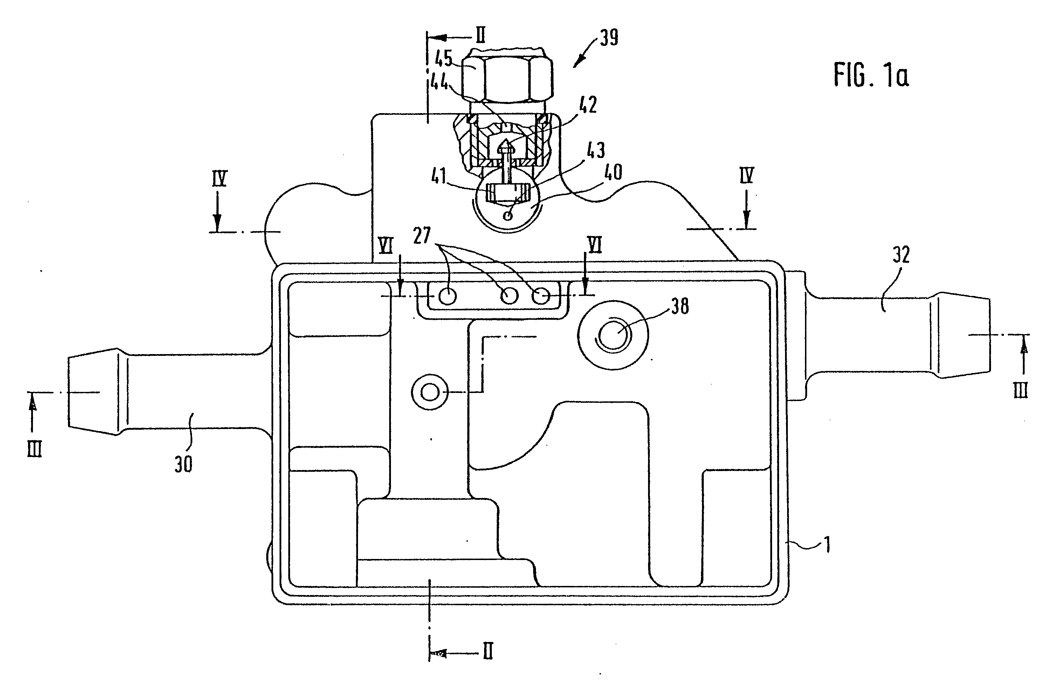

Figuren 1 und 1a Draufsichten auf einen Durchflußmesser

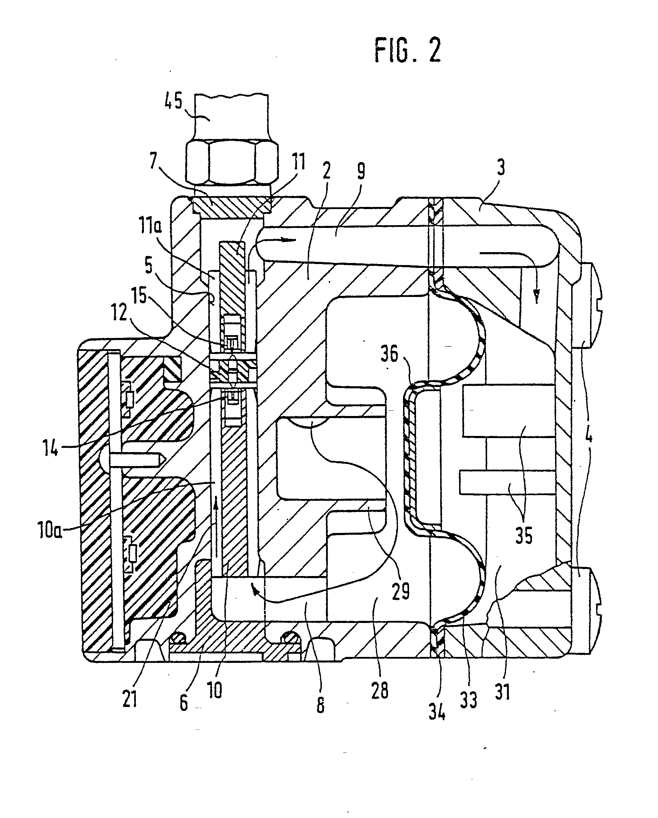

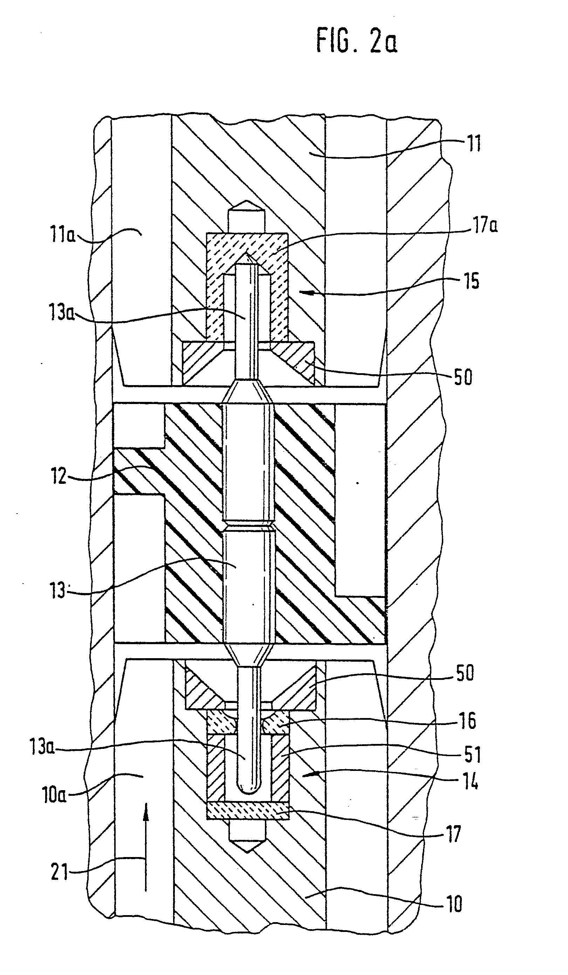

Figur 2 einen Schnitt entlang der Linie II-II in Figur 1

Figur 2a ein vergrößerter Ausschnitt aus Figur 2

Figur 3 einen Schnitt entlang der Linie III-III in Figur 1

Figur 4 einen Schnitt entlang der Linie IV-IV in Figur 1

Figur 5 das Turbinenrad des Durchflußmessers nach Figur 1 im Teilschnitt

Figur 6 einen Teilschnitt entlang der Linie VI-VI in Figur 1

Figur 7 einen Längsschnitt durch einen Gleichrichter mit Lagerstelle nach Figur 1.

Der in den Figuren dargestellte Durchflußmesser, der für Flüssigkeiten vorgesehen ist. soll insbesondere als Kraftstoffverbrauchsmesser für Kraftfahrzeuge verwendet werden.

Der Gehäuseblock 1 des Durchflußmessers ist aus zwei Gehäusehälften 2 und 3 gebildet, die durch Schrauben 4 fest miteinander verbunden sind. In der Gehäusehälfte 2 ist eine durchgehende Meßbohrung 5 ausgebildet, deren nach außen gerichtete Mündungen durch Verschlüsse 6 und 7 verschlossen sind.

In den einen Endbereich der Meßbohrung 5. mündet radial eine Zuflußbohrung 8, während in den anderen Endbereich der Meßbohrung 5 ebenfalls radial eine Abflußbohrung 9 einmündet. Die Meßbohrung 5 ist dabei so senkrecht verlaufend angeordnet, daß die Zuflußbohrung 8 im unteren und die Abflußbohrung 9 in den oberen Bereich der Meßbohrung 5 einmündet.

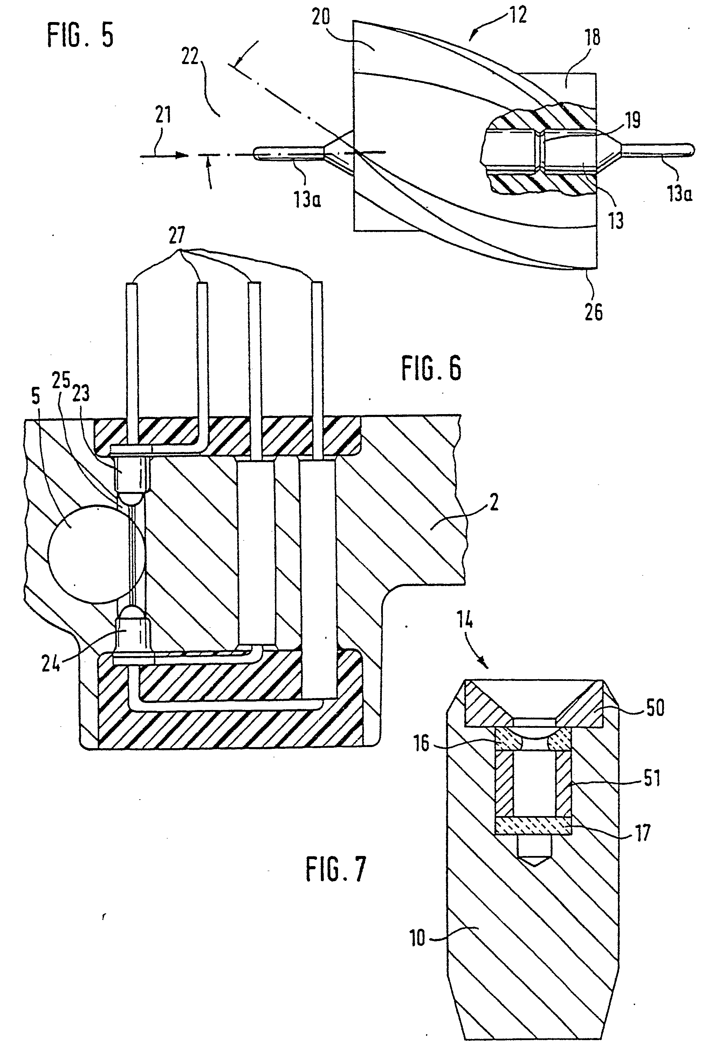

In der Meßbohrung 5 sind zwischen der Zuflußbohrung 8 und der Abflußbohrung 9 zwei Gleichrichter 10 und 11 mit ihren Blättern 11a und 10a durch Preßpassung eingesetzt, zwischen denen ein Turbinenrad 12 angeordnet ist. Das Turbinenrad 12, das in Figur 5 vergrößert dargestellt ist, besitzt eine Lagerwelle 13, deren Endzapfen 13a an axial und radial führenden Lagerstellen 14 und 15 drehbar gelagert sind, die in den dem Turbinenrad 12 zugewandten Stirnseiten der Gleichrichter 10 und 11 ausgebildet sind.

Der Gleichrichter 10 ist mit dem Verschluß als ein Bauteil ausgebildet.

Die Lagerung des Turbinenrades 12 in den Lagerstellen 14 und 15 ist so, daß das Turbinenrad 12 ein axiales Spiel besitzt.

In den Lagerstellen 14 und 15 sind die Endzapfen 13a der aus Stahl bestehenden Lagerwelle 13 in einem Lochstein 16 radial geführt und durch Decksteine 17 und 17a in ihrer Axialbewegung begrenzt.

Der Flügelkörper 18 des Turbinenrades 12 ist ein Kunststoffteil, das auf der Lagerwelle 13 sitzt. Damit sich der Flügelkörper 18 nicht auf der Lagerwelle 13 axial verschieben kann, ist diese an ihrer von dem Flügelkörper 18 umschlossenen zylindrischen Mantelfläche mit Ausnehmungen 19 versehen, in die der Werkstoff des Flügelkörpers 18 eingreift.

Die Anströmflächen 20 des Turbinenrades 12 sind gegenüber der Anströmrichtung 21 um einen bestimmten Winkel 22 geneigt. Dieser Winkel 22, der vorzugsweise 52° beträgt, ist so gewählt, daß die in Anströmrichtung 21 gerichtete Kraftstoffkomponente der von dem Durchflußstrom auf das Turbinenrad 12 ausgeübten Kraft gleich oder größer ist als das Gewicht des Turbinenrades 12. Dadurch wird beim Anströmen des Turbinenrades 12 dieses von dem Deckstein 17 der Lagerstelle 14 nach oben abgehoben und dreht sich frei schwebend. Erhöht sich die Anströmgeschwindigkeit, so gelangt die Lagerwelle 13 am Deckstein 17a der Lagerstelle 15 axial in Anlage. Dadurch, daß bei hoher Anströmgeschwindigkeit auch eine hohe Drehkraft auf das Turbinenrad 12 wirkt, haben die Reibungskräfte durch die axiale Abstützung der Lagerwelle 13 an der Lagerstelle 15 praktisch keinen Einfluß auf die Meßgenauigkeit des Durchflußmessers.

Die Drehfrequenz des Turbinenrades 12 und damit der Durchflußstrom wird durch ein lichtempfindliches Element 23 erfaßt, das mit einer Lichtquelle 24 zusammenwirkt. Element 23 und Lichtquelle 24 sind in einer die Meßbohrung im Bereich des Turbinenrades 12 schneidenden Bohrung 25 so einander gegenüberliegend angeordnet, daß der von der Lichtquelle 24 zum Element 23 gerichtete Lichtstrahl während der Drehbewegung des Turbinenrades 12 von dessen Flügel 26 unterbrochen wird, durch die Lücke zwischen zwei Flügeln 26 aber hindurchtreten kann. Dadurch erfaßt das Element 23 eine der Drehfrequenz des Turbinenrades 12 proportionale Frequenz von Lichtimpulsen, die über Anschlüsse 27 an eine nicht dargestellte Meßelektronik weitergeleitet werden.

Die Zuflußbohrung 8 führt von der Meßbohrung 5 zu einer ersten Kammerhälfte 28, die in der zur Gehäusehälfte 3 gerichteten Stirnwand der Gehäusehälfte 2 ausgebildet ist. Über einen mittig in die erste Kammerhälfte 28 mündenden Einlaßstutzen 29 ist die Kammerhälfte 28 mit einem Zulaufanschluß 30 verbunden.

Entsprechend der ersten Kammerhälfte 28 ist in der Gehäusehälfte 2 zugewandten Stirnseite der Gehäusehälfte 3 eine zweite Kammerhälfte 31 ausgebildet, in die die Abflußbohrung 9 mündet und von der eine Verbindung zu einem Ablaufanschluß 32 führt. Zwischen die gegeneinander verspannten Flächen der Gehäusehälften 2 und 3 ist eine Membran 33 eingespannt, die die Kammerhälften 28 und 31 voneinander trennt. Zur Abdichtung ist zwischen die Gehäusehälften 3 und die Membran 33 eine Dichtung 34 gelegt.

Die Bewegungsmöglichkeit der Membran 33 in den beiden Kammerhälften 28 und 31 wird zum einen durch den Einlaßstutzen 29 und zum anderen durch mit der Gehäusehälfte 3 fest verbundene Anschläge 35 begrenzt, an denen die Membran 33 über ein mit ihr verbundenes Versteifungsteil 36 in Anlage kommt.

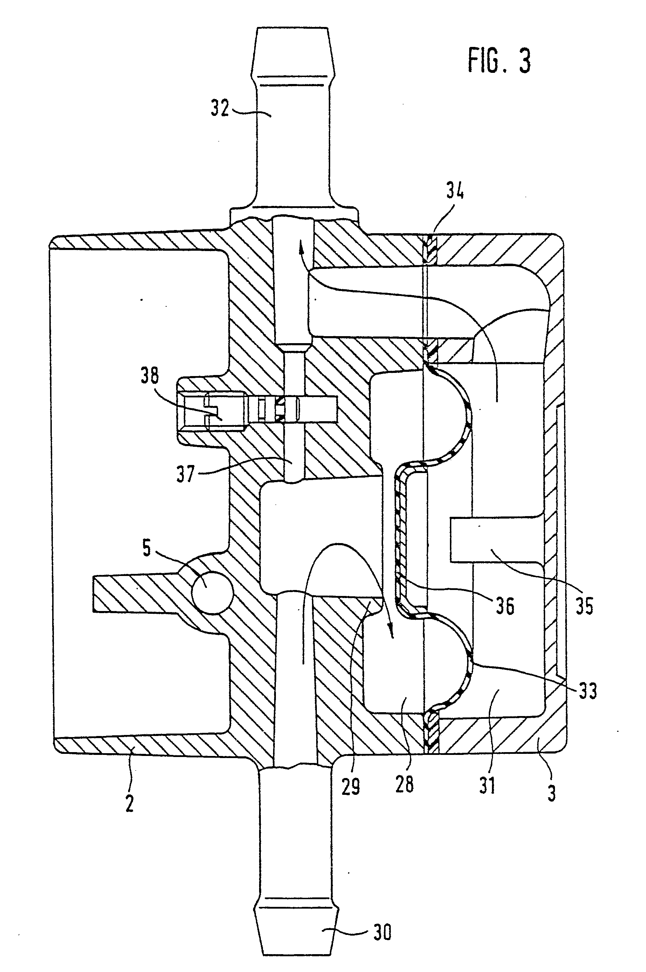

Der Durchflußmesser ist so in das Kraftfahrzeug eingebaut, daß die Ebene der Membran 33, welche der Ebene entspricht, in der die Gehäusehälften 2 und 3 aneinander liegen, unter einem Winkel zwischen 45° und 90° zur Längsachse des Kraftfahrzeuges angeordnet ist. Wie in Figur 3 zu sehen ist, führt von dem Einlaßstutzen 29 eine Verbindung 37 direkt zum Ablaufanschluß 32. Der Durchtrittsquerschnitt dieser Verbindung 37 ist durch eine Absperrschraube 38 mehr oder weniger absperrbar. Mit dieser Absperrschraube 38 kann eine Eichung des Durchflußmessers nach dessen Montage erfolgen. Eine Eichung ist erforderlich, um z. B. durch Bearbeitungstoleranzen an den einzelnen Bauteilen hervorgerufene Meßfehler auszugleichen.

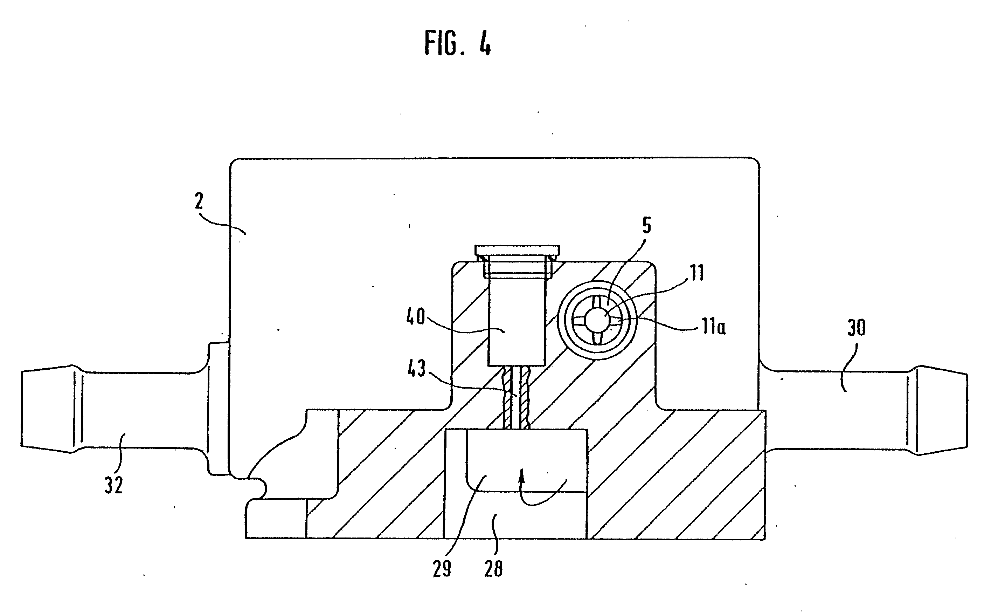

In Figur 4 ist eine Schnittdarstellung mit einem Gasabscheideventil 39 dargestellt. Der obere Bereich der Kammerhälfte 28 ist über einen Einlaß 43 mit einer Ventilkammer 40 verbunden, in der ein Schwimmer 41 angeordnet ist. Der Schwimmer 41 trägt an seinem oberen Ende ein Schließglied 42, durch das ein in den oberen Bereich der Ventilkammer 40 mündender Auslaß 44 verschließbar ist. Dabei bildet die Mündung des Auslasses 44 in die Ventilkammer 40 den Ventilsitz.

Der Auslaß 44 führt zu einem Anschluß 45, der mit einem nicht dargestellten Rücklauf verbunden ist, welcher zu einem Kraftstofftank des Fahrzeuges führt.

Dadurch, daß der Einlaß 43 in den oberen Bereich der ersten Kammerhälfte 28 einmündet, gelangen in der Flüssigkeit vorhandene Gasblasen durch den Einlaß 43 in die Ventilkammer 40 und sammeln sich in deren oberen Bereich. Da die Ventilkammer 40 normalerweise mit Flüssigkeit gefüllt ist, ist der Schwimmer 41 in seiner oberen Lage, so daß das Schließglied 42 den Auslaß 44 absperrt. Ist die Menge des angesammelten Gases so groß und das Flüssigkeitsniveau in der Ventilkammer so weit abgesunken, daß der Schwimmer 41 absinkt, wird der Auslaß 44 geöffnet und das Gas kann abströmen. Der dadurch bewirkte Anstieg des Flüssigkeitsniveaus in der Ventilkammer 40 hebt nun den Schwimmer 41, so daß der Auslaß 44 wieder abgesperrt wird. Dadurch, daß die Gasblasen bereits vor der Meßbohrung 5 aus der Flüssigkeit entnommen werden, können sie nicht die Messung am Turbinenrad 12 beeinflussen und zu Meßfehlern führen.

**Patentansprüche**

1. Durchflußmesser für Flüssigkeiten, mit einem Gehäuseblock (1), in dem radial in eine senkrechte Meßbohrung (5) einmündend eine Zuflußbohrung (8) und eine Abflußbohrung (9) vorgesehen sind, wobei in der Meßbohrung (5) ein vom Durchflußstrom anströmbares Flügelrad (12) angebracht ist, das eine senkrecht angeordnete Lagerwelle (13) besitzt, deren Endzapfen (13a) jeweils in einer axial und radial führenden Lagerstelle (14, 15) drehbar gelagert sind, mit einem oder mehreren Flügeln des Flügelrades (12), deren Anströmflächen gegenüber der Anströmrichtung geneigt sind und mit einem die Drehfrequenz des Flügelrades erfassenden Sensor, wobei die Lagerwelle (13) mit einem axialen Spiel zwischen den Lagerstellen (14, 15) angeordnet und das Flügelrad (12) von unten her anströmbar ist und wobei die Anströmflächen gegenüber der Anströmrichtung derart geneigt sind, daß die in Anströmrichtung gerichtete Kraftkomponente der von dem Durchflußstrom auf das Flügelrad ausgeübten Kraft gleich oder größer ist als das Gewicht des Flügelrades, dadurch gekennzeichnet, daß die Zuflußbohrung (8) mit einer ersten Kammerhälfte (28) und die Abflußbohrung (9) mit der anderen Kammerhälfte (31) des durch eine bewegliche Wand (33) in die zwei Kammerhälften (28 und 31) unterteilten Gehäuseblocks (1) verbunden ist.

2. Durchflußmesser nach Anspruch 1, dadurch gekennzeichnet, daß die bewegliche Wand eine Membran (33) ist.

3. Durchflußmesser nach einem der vorhergehenden Ansprüche, der in einem Fahrzeug angeordnet ist, dadurch gekennzeichnet, daß die Ebene der beweglichen Wand (33) unter einem Winkel zwischen 45° und 90° zur Längsachse des Fahrzeugs angeordnet ist.

4. Durchflußmesser nach einem der vorhergehenden Ansprüche, dadurch gekennzeichnet, daß der Gehäuseblock (1) aus zwei miteinander verbindbaren Gehäusehälften (2 und 3) besteht, wobei in jeder Gehäusehälfte (2 und 3) topfartig eine der Kammerhälften (28 und 31) ausgebildet ist, deren Öffnungen zueinander gerichtet sind und daß die Membran (33) mit ihrem umlaufenden Randbereich zwischen den gegeneinander verspannten Flächen der Gehäusehälften (2 und 3) angeordnet ist.

5. Durchflußmesser nach Anspruch 4, dadurch gekennzeichnet, daß zwischen einer der Flächen und der ihr zugewandten Seite des umlaufenden Randbereichs der Membran (33) eine umlaufende Dichtung (34) angeordnet ist.

6. Durchflußmesser nach Anspruch 5, dadurch gekennzeichnet, daß die Dichtung (34) ein Dichtring ist.

7. Durchflußmesser nach Anspruch 5, dadurch gekennzeichnet, daß die Membran (33) in ihrem zwischen den gegeneinander verspannten Flächen der Gehäusehälften (2 und 3) angeordneten Randbereich eine flüssigkeitsdichte Imprägnierung besitzt.

8. Durchflußmesser nach Anspruch 7, dadurch gekennzeichnet, daß die Imprägnierung kraftstoffabstoßend ist.

9. Durchflußmesser nach einem der vorhergehenden Ansprüche, dadurch gekennzeichnet, daß an den nach oben gerichteten Bereich der Zuflußbohrung (8) bzw. der mit ihr verbundenen Kammerhälfte (28) ein Gasabscheideventil (39) angeschlossen ist.

10. Durchflußmesser nach Anspruch 9, dadurch gekennzeichnet, daß das Gasabscheideventil (39) ein Schwimmerventil ist.

11. Durchflußmesser nach Anspruch 10, dadurch gekennzeichnet, daß der Schwimmer (41) fest mit dem Schließglied (42) verbunden ist.

12. Durchflußmesser nach Anspruch 10, dadurch gekennzeichnet, daß das Gasabscheideventil (39) eine Ventilkammer (40) besitzt, in deren unteren Bereich ein mit der Zuflußbohrung (8) bzw. der mit ihr verbundenen Kammerhälfte (28) in Verbindung stehender Einlaß (43) mündet und in deren oberen Bereich ein Auslaß (44) mündet, der von einem Schließglied (42) verschließbar ist, das von einem in der Ventilkammer (40) angeordneten Schwimmer (41) betätigbar ist.

13. Durchflußmesser nach Anspruch 12, dadurch gekennzeichnet, daß das Gasabscheideventil (39) ein Sitzventil und die Mündung des Auslasses (44) in die Ventilkammer (40) der Ventilsitz ist.

14. Durchflußmesser nach einem der vorhergehenden Ansprüche, dadurch gekennzeichnet, daß das Schließglied (42) und/oder der Schwimmer (41) in Ventilbetätigungsrichtung geführt ist.

15. Durchflußmesser nach Anspruch 30, dadurch gekennzeichnet, daß der Schwimmer über eine Führungsstange mit dem Ventilglied verbunden ist, die in einer gehäusefesten Führung geführt ist.

16. Durchflußmesser nach einem der vorhergehenden Ansprüche, dadurch gekennzeichnet, daß der Auslaß mit der Abflußbohrung verbunden ist.

17. Durchflußmesser nach einem der Ansprüche 1-15, dadurch gekennzeichnet, daß der Auslaß (44) mit einem Rücklauf verbunden ist.

18. Durchflußmesser nach einem der vorhergehenden Ansprüche, dadurch gekennzeichnet, daß die Ventilkammer (40) topfartig ausgebildet und die Öffnung durch eine Verschlußschraube verschlossen ist, wobei in der Verschlußschraube der Auslaß (44) ausgebildet ist.

19. Durchflußmesser nach einem der vorhergehenden Ansprüche, dadurch gekennzeichnet, daß durch einen Strahlungssender entlang einer Strahlungsbahn eine Strahlung zu einem Strahlungsempfänger sendbar ist, wobei die Strahlung intermittierend durch die rotierenden Flügel (26) unterbrechbar ist.

20. Durchflußmesser nach Anspruch 19, dadurch gekennzeichnet, daß der Strahlungssender eine Lichtquelle (24) ist und der Strahlungsempfänger ein lichtempfindliches Element (23) ist, von dem elektrische Signale erzeugbar sind.

21. Durchflußmesser nach Anspruch 20, dadurch gekennzeichnet, daß die elektrischen Signale einer Meßelektronik zuleitbar und in eine elektrische Meßgröße umwandelbar sind.

22. Durchflußmesser nach Anspruch 21, dadurch gekennzeichnet, daß in einem der Kanäle bzw. der Kammern des Durchflußmessers ein Temperaturfühler angeordnet ist, von dem eine der Temperatur des Strömungsmediums entsprechende elektrische Größe erzeugbar ist, die der Meßelektronik zur Beeinflussung der Meßgröße zuleitbar ist.

23. Durchflußmesser nach einem der vorhergehenden Ansprüche, dadurch gekennzeichnet, daß die Neigung der Anströmflächen (20) gegenüber der Anströmrichtung (21) zwischen 45° und 65° beträgt.

24. Durchflußmesser nach Anspruch 23, dadurch gekennzeichnet, daß die Neigung 52° beträgt.

25. Durchflußmesser nach einem der vorhergehenden Ansprüche, dadurch gekennzeichnet, daß das Flügelrad ein Tubinenrad (12) ist.

26. Durchflußmesser nach einem der vorhergehenden Ansprüche, dadurch gekennzeichnet, daß die Lagersteilen (14 und 15) in den zum Flügelrad gerichteten Stirnseiten von in Anströmrichtung (21) vor und hinter dem Flügelrad in der Rohrleitung angeordneten Gleichrichtern (10 und 11) ausgebildet sind.

27. Durchflußmesser nach einem der vorhergehenden Ansprüche, dadurch gekennzeichnet, daß die in Anströmrichtung hintere Lagerstelle ein Spitzenlager ist.

28. Durchflußmesser nach einem der vorhergehenden Ansprüche, dadurch gekennzeichnet, daß die in Anströmrichtung vordere Lagerstelle ein Zapfenlager ist.

29. Durchflußmesser nach einem der vorhergehenden Ansprüche, dadurch gekennzeichnet, daß die Rohrleitung eine durchgehende Meßbohrung (5) in dem Gehäuseblock (1) ist, in die das Flügelrad und die Gleichrichter (10 und 11) axial einsetzbar sind.

30. Durchflußmesser nach Anspruch 29, dadurch gekennzeichnet, daß die Gleichrichter (10 und 11) mit Preßpassung in die Meßbohrung (5) einsetzbar sind.

31. Durchflußmesser nach Anspruch 29, dadurch gekennzeichnet, daß das nach außen gerichtete Ende der Meßbohrung (5) durch einen Verschluß (6 und 7) verschlossen ist.

32. Durchflußmesser nach Anspruch 31, dadurch gekennzeichnet, daß Verschluß (6) und Gleichrichter (10) ein Bauteil ist.

33. Durchflußmesser nach einem der vorhergehenden Ansprüche, dadurch gekennzeichnet, daß das Flügelrad aus einem auf die Lagerwelle (13) aufgesetzten Flügelkörper (18) besteht.

34. Durchflußmesser nach Anspruch 33, dadurch gekennzeichnet, daß der Durchflußkörper (18) ein Kunststoffteil und die Lagerwelle (13) ein Metallteil ist.

35. Durchflußmesser nach Anspruch 34, dadurch gekennzeichnet, daß der Flügelkörper (18) auf die Lagerwelle (13) aufgespritzt ist.

36. Durchflußmesser nach Anspruch 34, dadurch gekennzeichnet, daß die Lagerwelle (13) an ihrer von dem Flügelkörper (18) umschlossenen

zylindrischen Mantelfläche Ausnehmungen (19) besitzt.

**Claims**

1. Flow meter for liquids, with a housing block (1) wherein an inlet bore (8) and an outlet bore (9) are provided which open radially into a vertical measuring bore (5), there being arranged in the measuring bore (5) a bladed wheel (12) on to which the throughflow can flow and which has a vertically arranged bearing shaft (13) whose end journals (13a) are respectively rotatably mounted in an axially and radially guiding bearing (14, 15), with one or more blades on the bladed wheel (12), whose incident flow surfaces are inclined relatively to the incident flow direction, and with a sensor detecting the rotation frequency of the bladed wheel, the bearing shaft (13) being arranged with some axial play between the bearings (14, 15), and the bladed wheel (12) is adapted to be impinged on by the throughflow from below, and the incident flow surfaces are so inclined relatively to the incident flow direction that the component of force directed in the incident flow direction of the force which is exerted by the throughflow on the bladed wheel is equal to or greater than the weight of the bladed wheel, characterised in that the inlet bore (8) is connected with a first chamber half (28), and the outlet bore (9) with the other chamber half (31) of the housing block (1), which housing block is divided into the two chamber halves (28 and 31) by a movable wall (33).

2. Flow meter according to claim 1, characterised in that the movable wall is a diaphragm (33).

3. Flow meter according to one of the preceding claims, which is arranged in a vehicle, characterised in that the plane of the movable wall (33) is arranged at an angle of between 45° and 90°. relatively to the longitudinal axis of the vehicle.

4. Flow meter according to one of the preceding claims, characterised in that the housing block (1) comprises two housing halves (2 and 3) connectable to one another, and in each housing half (2 and 3) a cup-like shape is given to one of the chamber halves (28 and 31) the openings of which are directed towards one another, and that the diaphragm (33) is arranged with its encircling edge region between the clamped-together surfaces of the housing halves (2 and 3).

5. Flow meter according to claim 4, characterised in that an encircling sealing element (34) is arranged between one of the surfaces and that side of the encircling edge region of the diaphragm (33) which faces towards said surface.

6. Flow meter according to claim 5, characterised in that the sealing element (34) is a sealing ring.

7. Flow meter according to claim 5, characterised in that the diaphragm (33) is given fluid-tight impregnation in its edge region situated between the clamped-together surfaces of the housing halves (2 and 3).

8. Flow meter according to claim 7, characterised in that the impregnation is fuel-repelling.

9. Flow meter according to one of the preceding claims, characterised in that a gas separating valve (39) is connected to the upwardly directed region of the inlet bore (8) or the chamber half (28) connected thereto.

10. Flow meter according to claim 9, characterised in that the gas separating valve (39) is a float valve.

11. Flow meter according to claim 10, characterised in that the float (41) is connected securely to the closure element (42).

12. Flow meter according to claim 10, characterised in that the gas separating valve (39) has a valve chamber (40), into the lower region of which there opens an inlet (43) communicating with the inlet bore (8) or with the chamber half (28) connected therewith, and into whose upper region an outlet (44) opens which is closable by a closure element (42) operatable by a float (41) arranged in the valve chamber (40).

13. Flow meter according to claim 12, characterised in that the gas separating valve (39) is a seat-type valve and the mouth with which the outlet (44) opens into the valve chamber (40) is the valve seat. .

14. Flow meter according to one of the preceding claims, characterised in that the closure element (42) and/or the float (41) are/is guided in the valve operating direction.

15. Flow meter according to claim 30, characterised in that the float is connected to the valve element by means of a guide rod which is guided in a guide fast with the housing.

16. Flow meter according to one of the preceding claims, characterised in that the outlet is connected to the outlet bore.

17. Flow meter according to one of claims 1-15, characterised in that the outlet (44) is connected to a return duct. ·

18. Flow meter according to one of the preceding claims, characterised in that the valve chamber (40) is made cup-shaped, and the opening is closed by a closure screw, in which the outlet (44) is formed.

19. Flow meter according to one of the preceding claims, characterised in that radiation is transmittable by a radiation transmitter along a path of radiation to a radiation receiver, the radiation being interruptable intermittently by the rotating blades (26).

20. Flow meter according to claim 19, characterised in that the radiation transmitter is a light source (24) and the radiation receiver is a light-sensitive element (23) whereby electrical signals can be produced.

21. Flow meter according to claim 20, characterised in that the electrical signals are feedabie to a measurement electronics system and convertable into an electrical measurement value.

22. Flow meter according to claim 21, characterised in that in one of the ducts or chambers of the flow meter there is arranged a temperature sensor whereby an electrical value corresponding to the temperature of the flow medium can be produced, which value is feedable to the measurement electronics system for influencing the measurement value.

23. Flow meter according to one of the preceding claims, characterised in that the inclination of the incident flow surfaces (20) relatively to the incident flow direction (21) amounts to between 45° and 65°.

24. Flow meter according to claim 23, characterised in that the inclination amounts to 52°.

25. Flow meter according to one of the preceding claims, characterised in that the bladed wheel is a turbine wheel (12).

26. Flow meter according to one of the preceding claims, characterised in that the bearings (14 and 15) are formed in those ends of directing elements (10 and 11) which are directed towards the bladed wheel, said directing elements being arranged upstream of and downstream of the bladed wheel in the conduit as considered in the direction of incident flow (21).

27. Flow meter according to one of the preceding claims, characterised in that the downstream-bearing in the direction of incident flow is a point support bearing.

28. Flow meter according to one of the preceding claims, characterised in that the upstream bearing in the direction of incident flow is a journal bearing.

29. Flow meter according to one of the preceding claims, characterised in that the conduit is a through measuring bore (5) in the housing block (1) and the bladed wheel and the directing elements (10 and 11) are axially insertable into said bore.

30. Flow meter according to claim 29, characterised in that the directing elements (10 and 11) are insertable in the measuring bore (5) with a force fit.

31. Flow meter according to claim 29, characterised in that the outwardly directed end of the measuring bore (5) is closed by a closure element (6 and 7).

32. Flow meter according to claim 31, characterised in that closure element (6) and directing element (10) form one unit.

33. Flow meter according to one of the preceding claims, characterised in that the bladed wheel comprises a blade element (18) arranged on the bearing shaft (13).

34. Flow meter according to claim 33, characterised in that the blade element (18) is a synthetic plastic material part and the bearing shaft (13) is a metal part.

35. Flow meter according to claim 34, characterised in that the blade element (18) is injection moulded on to the bearing shaft (13).

36. Flow meter according to claim 34, characterised in that the bearing shaft (13) comprises recesses (19) at its cylindrical generated surface surrounded by the blade element (18).

**Revendications**

1. Débitmètre pour liquide, comportant un corps (1) dans lequel sont formés un canal (8) d'arrivée et un canal (9) de sortie qui débouchent radialement dans un canal (5) vertical de mesure, une roue (12) à ailettes, qui est disposée dans ce canal (5) de mesure et qui est léchée par le liquide, comportant un arbre (13) orienté verticalement, dont les tourillons d'extrémité (13a) sont logés chacun dans un palier (14, 15) de guidage axial et radial, cette roue (12) comportant une ou plusieurs ailettes dont les surfaces léchées par le liquide sont inclinées par rapport au sens d'écoulement de ce liquide et le débitmètre comportant encore un capteur décelant la fréquence de rotation de ladite roue à ailettes, l'arbre (13) étant monté entre les paliers (14, 15) avec un certain jeu axial et la roue (12) étant entraînée vers le haut par le courant liquide, les surfaces léchées par ce liquide étant inclinées par rapport au sens de l'écoulement de façon que la composante, orientée dans ce sens d'écoulement, de la poussée que le courant de liquide exerce sur la roue soit égale ou supérieure au poids de cette roue, débitmètre caractérisé en ce que le canal (8) d'arrivée communique avec une première demi-chambre (28) et le canal (9) de sortie avec l'autre demi-chambre (31) du corps (1), qu'une paroi mobile (33) divise en ces deux demi-chambres (28 et 31).

2. Débitmètre selon la revendication 1, caractérisé en ce que la paroi mobile est une membrane (33).

3. Débitmètre selon l'une des revendications précédentes, monté dans un véhicule, et caractérisé en ce que le plan de la paroi mobile (33) forme avec l'axe longitudinal du véhicule un angle compris entre 45 et 90°.

4. Débitmètre selon l'une des revendications précédentes, caractérisé en ce que le corps (1) est composé de deux demi-corps (2, 3) qui peuvent être réunis et dans chacun desquels est formée en forme de cuvette l'une des demi-chambres (28, 31), dont les ouvertures sont tournées l'une vers l'autre ; et en ce que la surface marginale périphérique de la membrane (33) est disposée entre les surfaces, appliquées l'une contre l'autre, de ces demi-corps (2, 3).

5. Débitmètre selon la revendication 4, caractérisé en ce qu'un joint périphérique (34) est disposé entre l'une des surfaces et le côté tourné vers elle de la partie marginale périphérique de la membrane (33).

6. Débitmètre selon la revendication 5, caractérisé en ce que le joint (34) est une garniture annulaire.

7. Débitmètre selon la revendication 5, caractérisé en ce que la partie marginale de la membrane (33), disposée entre les surfaces appliquées l'une contre l'autre des demi-corps (2, 3), comporte une imprégnation imperméable aux liquides.

8. Débitmètre selon la revendication 7, caractérisé en ce que l'imprégnation est répulsive vis-à-vis du carburant.

9. Débitmètre selon l'une des revendications précédentes, caractérisé en ce qu'une soupape de dégazage (39) communique avec la partie orientée vers le haut du canal (8) d'arrivée ou avec la demi-chambre (28) communiquant avec lui.

10. Débitmètre selon la revendication 9, caractérisé en ce que la soupape (39) de dégazage est une soupape à flotteur.

11. Débitmètre selon la revendication 10, caractérisé en ce que le flotteur (41) est solidaire de l'obturateur (42).

12. Débitmètre selon la revendication 10, caractérisé en ce que la soupape (39) de dégazage comporte une chambre (40), à la partie inférieure de laquelle débouche un passage d'entrée (43) qui communique avec le canal (8) d'arrivée ou avec la demi-chambre (28) qui y est reliée, et à la partie supérieure de laquelle débouche un passage de sortie (44), qui peut être fermé par un obturateur (42) pouvant être actionné par un flotteur (41) disposé dans cette chambre (40) de la soupape.

13. Débitmètre selon la revendication 12, caractérisé en ce que la soupape (39) de dégazage est une soupape à siège, l'orifice, dans la chambre (40), du passage de sortie (44) constituant ce siège.

14. Débitmètre selon l'une des revendications précédentes, caractérisé en ce que l'obturateur (42) et/ou le flotteur (41) sont guidés dans le sens du fonctionnement de la soupape.

15. Débitmètre selon la revendication 14, caractérisé en ce que le flotteur est relié à l'obturateur par une tige de guidage, qui coulisse dans un guide solidaire du corps.

16. Débitmètre selon l'une des revendications précédentes, caractérisé en ce que le passage de sortie communique avec le canal de sortie.

17. Débitmètre selon l'une des revendications 1 à 15, caractérisé en ce que le passage de sortie (44) est relié à une conduite de retour.

18. Débitmètre selon l'une des revendications précédentes, caractérisé en ce que la chambre (40) de la soupape a la forme d'une cuvette et son ouverture est fermée par une vis obturatrice, le passage de sortie (44) étant formé dans cette vis.

19. Débitmètre selon l'une des revendications précédentes, caractérisé par un émetteur de rayonnement qui envoie sur une trajectoire déterminée un rayonnement sur un récepteur, ce rayonnement étant coupé par intermittence par les ailettes (26) en rotation.

20. Débitmètre selon la revendication 19, caractérisé en ce que l'émetteur de rayonnement est une source lumineuse (24) et le récepteur est un élément photosensible (23) qui peut émettre des signaux électriques.

21. Débitmètre selon la revendication 20, caractérisé en ce que les signaux électriques peuvent être transmis à un circuit électronique de mesure et être transformés en une grandeur électrique de mesure.

22. Débitmètre selon la revendication 21, caractérisé en ce qu'une sonde thermométrique est disposée dans l'un des canaux ou l'une des chambres de ce débitmètre et peut émettre une grandeur électrique qui correspond à la température du liquide en circulation et qui peut être injectée dans le circuit électronique de mesure pour influer sur la grandeur mesurée.

23. Débitmètre selon l'une des revendications précédentes, caractérisé en ce que l'inclinaison des surfaces (20) léchées par le liquide, par rapport au sens (21) de l'écoulement, est comprise entre 45° et 65°.

24. Débitmètre selon la revendication 23, caractérisé en ce que l'inclinaison est égale à 52°.

25. Débitmètre selon l'une des revendications précédentes, caractérisé en ce que la roue à ailettes est une roue (12) de turbine.

26. Débitmètre selon l'une des revendications précédentes, caractérisé en ce que les paliers (14, 15) sont formés dans les côtés frontaux, tournés vers la roue à ailettes, d'organes (10, 11) régulateurs de l'écoulement, disposés dans la conduite en amont et en aval de cette roue.

27. Débitmètre selon l'une des revendications précédentes, caractérisé en ce que le palier aval est un palier à pivot.

28. Débitmètre selon l'une des revendications précédentes, caractérisé en ce que le palier amont est un palier de tourillon.

29. Débitmètre selon l'une des revendications précédentes, caractérisé en ce que la conduite est un canal (5) de mesure qui traverse de part en part le corps (1) et dans lequel la roue à ailettes et les organes régulateurs (10, 11) peuvent être introduits axialement.

30. Débitmètre selon la revendication 29, caractérisé en ce que les organes régulateurs (10, 11) peuvent être introduits avec ajustage serré dans le canal (5) de mesure.

31. Débitmètre selon la revendication 29, caractérisé en ce que l'extrémité débouchant à l'extérieur du canal (5) de mesure est obturée par un bouchon (6, 7).

32. Débitmètre selon la revendication 31, caractérisé en ce que le bouchon (6) et l'organe régulateur (10) constituent un élément monobloc.

33. Débitmètre selon l'une des revendications précédentes, caractérisé en ce que la roue à ailettes est composée d'un corps (18) à ailettes monté sur l'arbre (13).

34. Débitmètre selon la revendication 33, caractérisé en ce que le corps (18) à ailettes est une pièce en matière plastique et l'arbre (13) est une pièce métallique.

35. Débitmètre selon la revendication 34, caractérisé en ce que le corps (18) à ailettes est moulé par injection sur l'arbre (13).

36. Débitmètre selon la revendication 34, caractérisé en ce que l'arbre (13) comporte des évidements ou gorges (19) sur sa surface cylindrique entourée par le corps (18) à ailettes.

FIG. 1

0 069 170

FIG. 1a

0 069 170

FIG. 2

# FIG. 2a

FIG. 3

FIG. 4

FIG. 5

20  22  21  12  18  19  13a  13  13a  26

FIG. 6

27  5  25  23  2  24

14  50  16  51  17  10

FIG. 7